# EUROPÄISCHE PATENTANMELDUNG

(11) **EP 3 733 291 A2**
(43) Veröffentlichungstag der Anmeldung: **04.11.2020**
(21) Anmeldenummer: 20172489.5
(22) Anmeldetag: 30.04.2020
(51) Int. Cl.: B01L 3/00, G01N 21/03, G01N 21/05

(54) **MIKROTITERPLATTE**

(30) Priorität: 03.05.2019 DE 102019003135
(71) Anmelder: InnoME GmbH, 32339 Espelkamp (DE); Karlsruher Institut für Technologie, 76131 Karlsruhe (DE)
(72) Erfinder: HUBBUCH, Jürgen, 76327 Pfinztal (DE); RADTKE, Carsten, 76133 Karlsruhe (DE); SCHERMEYER, Marie-Therese, 10999 Berlin (DE); WOYWOD, Martin, 80805 München (DE); BAASNER, Daniel, 32427 Minden (DE); JUNGMANN, Jannik, 32584 Löhne (DE)
(74) Vertreter: Meissner Bolte Partnerschaft mbB

(57) **Zusammenfassung**

Die Erfindung betrifft eine Mikrotiterplatte, bevorzugt als Spritzgussteil aus Kunststoff, mit mindestens einer ersten und einer zweiten, insbesondere als Messkammer ausgebildeten Fluidkammer (13a-d), die durch einen im Querschnitt zu allen Seiten bzw. ringsherum geschlossenen Fluidkanal (12a-c) miteinander verbunden sind. Die Erfindung ist dadurch gekennzeichnet, dass dem Fluidkanal (12a-c) ein Blasenfänger (24) zugeordnet ist, mit dem Luft- oder Gasblasen, die sich entlang einer den Fluidkanal (12a-c) nach oben hin schließenden Deckenwandung des Fluidkanals insbesondere von der ersten zur zweiten Fluidkammer bewegen, in ihrer Bewegung gestoppt werden können.

## Beschreibung

Die vorliegende Erfindung betrifft eine Mikrotiterplatte mit den Merkmalen des Oberbegriffs des Anspruchs 1 und eine Mikrotiterplatte mit den Merkmalen des Oberbegriffs des Anspruchs 2.

Mikrotiterplatten mit mehreren Fluidkammern für zu untersuchende Proben können nicht nur, aber unter anderem dazu eingesetzt werden, mittels photometrischer Messmethoden die Konzentration von bestimmten Molekülen in einer Flüssigprobe zu bestimmen. Es sind dabei auch Mikrotiterplatten mit mehreren rasterförmig über die Mikrotiterplatten verteilt angeordneten Messkammersystemen bekannt, bei denen jedes Messkammersystem durch eine Kanalstruktur miteinander verbundene Fluidkammern unterschiedlicher Höhe aufweist, sodass Detektionslicht, das jeweils durch die Fluidkammern gestrahlt wird, unterschiedliche Proben-Pfadlängen ein und derselben Probe durchstrahlt. Unter Zuhilfenahme des Lambert-Beerschen Gesetzes kann dann durch Analyse der aufgrund der unterschiedlichen Pfadlängen unterschiedlichen Absorptionswerte auf die Konzentration der in der Probe enthaltenen Molekülkonzentration rückgeschlossen werden.

Es ist Aufgabe der vorliegenden Erfindung, die eingangs genannten Mikrotiterplatten weiterzuentwickeln.

Diese Aufgabe wird gelöst durch eine Mikrotiterplatte mit den Merkmalen des Anspruchs 1 und eine Mikrotiterplatte mit den Merkmalen des Anspruchs 2.

Eine erfindungsgemäße Mikrotiterplatte gemäß Anspruch 1 verfügt demnach über mindestens eine erste und eine zweite Fluidkammer, die durch einen im Querschnitt zu allen Seiten bzw. ringsherum geschlossenen Fluidkanal miteinander verbunden sind, wobei dem Fluidkanal ein Blasenfänger zugeordnet ist, mit dem Luft- oder Gasblasen, die sich entlang einer den Fluidkanal nach oben hin schließenden Deckenwandung des Fluidkanals insbesondere von der ersten zur zweiten Fluidkammer bewegen, in ihrer Bewegung gestoppt werden können.

Hierdurch wird beispielsweise erreicht, insbesondere wenn eine oder beide Fluidkammern Messkammern sind, in die Proben zur Messung von Eigenschaften derselben einfüllbar sind, dass gegebenenfalls solche Messungen störende Luftblasen, die im Einsatz der Mikrotiterplatte aus dem Fluid bzw. der Probe ausgasen können und sich in dem Fluidkanal befinden, daran gehindert werden, in eine der beiden Fluidkammern zu wandern und die Messung dort zu beeinflussen. So könnten etwa Luftblasen, die in der ersten Fluidkammer ausgasen und dann über den Fluidkanal in Richtung der zweiten Fluidkammer wandern, an dem Blasenfänger an einer weiteren Bewegung gestoppt werden, sodass sie insbesondere optische, wie etwa photometrische Messungen in der zweiten Fluidkammer nicht stören.

Messkammern sind im Rahmen dieser Anmeldung entsprechend besondere Fluidkammern, die dafür vorgesehen sind, dass an in ihr befindlichem Fluid bzw. an in ihnen befindlicher Probenflüssigkeit Messungen durchgeführt werden können.

Eine erfindungsgemäße Mikrotiterplatte gemäß Anspruch 2 verfügt in Erweiterung der obigen Mikrotiterplatte über mehrere rasterförmig über die Mikrotiterplatte verteilt angeordnete Messkammersysteme, von denen jedes jeweils mindestens eine solche erste und zweite, ebenfalls vorzugsweise jeweils als Messkammer ausgebildete Fluidkammer aufweist, die über einen oben bereits genannten, im Querschnitt ringsherum geschlossenen, sich (in seiner Innenhöhe) von der ersten Fluidkammer zur zweiten Fluidkammer in mindestens einem Abschnitt nach oben hin aufweitenden Fluidkanal miteinander verbunden sind, vorzugsweise in einem Abschnitt, der sich über die gesamte Länge des Fluidkanals erstreckt. Die erste und die zweite Fluidkammer sind dabei jeweils nach oben hin durch eine Deckenwandung geschlossen, wobei die Innenhöhe der ersten Fluidkammer kleiner ist als die Innenhöhe der zweiten Fluidkammer. Die Mikrotiterplatte zeichnet sich dadurch aus, dass sich die Breite des sich (in der Innenhöhe) aufweitenden Fluidkanals in diesem Abschnitt bzw. vorzugsweise über die gesamte Länge des Fluidkanals hinweg von der ersten zu der zweiten Fluidkammer hin verengt.

Hierdurch wird erfindungsgemäß durch Verminderung von Druckunterschieden eine Optimierung der Strömung zwischen den beiden Fluidkammern erreicht, sodass bei Befüllung des Messkammersystem das Entstehen von das Ausgasen von Luftblasen begünstigenden turbulenten Strömungen verhindert oder begrenzt wird.

Die obigen sowie alle nachfolgenden beschriebenen Merkmale von erfindungsgemäßen Mikrotiterplatten können vorzugsweise miteinander kombiniert werden. Insbesondere können sämtliche nachfolgende Merkmale sowohl mit einer wie oben beschriebenen Mikrotiterplatte gemäß Anspruch 1 als auch mit einer Mikrotiterplatte gemäß Anspruch 2 kombiniert werden. So kann beispielsweise vorgesehen sein, dass der oben genannte Blasenfänger dem die erste und zweite Fluidkammer verbindenden Fluidkanal jedes Messkammersystems der Mikrotiterplatte gemäß Anspruch 2 zugeordnet ist.

Was den bereits beschriebenen Blasenfänger betrifft, so kann die Deckenwandung des Fluidkanals eine zum Fluidkanalinnenraum hin offene Ausnehmung in der Deckenwandung des Fluidkanals umfassen, in die dann eine Luft- oder Gasblase eindringen und dort gefangen bzw. gehalten werden kann.

Bevorzugt kann sich eine solche Ausnehmung in dem Bereich der Deckenwandung, in dem sie angeordnet ist, im Querschnitt betrachtet über die gesamte Breite der Deckenwandung erstrecken.

Alternativ zu einer Ausnehmung in der Deckenwandung kann der Blasenfänger auch einen mit der Deckenwandung des Fluidkanals verbundenen, nach unten gerichteten, insbesondere an die Deckenwandung angeformten Vorsprung oder Steg umfassen. Diese ist dabei vorzugsweise so bemessen, dass sich Luftblasen, die sich entlang der Deckenwandung bewegen, zwischen Vorsprung bzw. Steg und Deckenwandung gehalten werden bzw. durch den Steg gestoppt werden.

Vorzugsweise überdeckt der Steg dabei - bezogen auf den Querschnitt des Fluidkanals - eine im oberen Bereich des Kanals angeordnete Teilquerschnittsfläche der gesamten Fluidkanalquerschnittsfläche.

Insbesondere kann der Steg die Teilquerschnittsfläche zu der Deckenwandung des Fluidkanals hin und zu seitlichen Wandungen des Kanals hin dichtend überdecken, sodass sich seitlich und oberhalb des Steges keine Luft- oder Gasblasen an diesem vorbeibewegen können.

Was den Fluidkanal betrifft, so weitet sich dieser in dem mindestens einen Abschnitt von der ersten zur zweiten Fluidkammer nach oben hin derart auf, dass die (zum Innenraum des Kanals gewandte) Innenseite der Deckenwandung desselben in diesem Abschnitt zur Horizontalen geneigt verläuft.

Soweit in dieser Anmeldung von "horizontal" und "oben" oder "unten" gesprochen wird, beziehen sich diese Angaben auf einen bestimmungsgemäßen Gebrauch der Mikrotiterplatte, bei dem diese in horizontaler Ausrichtung auf einer horizontalen Tragfläche steht, wie etwa auf einem Tisch etc.

Vorzugsweise kann der Fluidkanal an einem Ende über eine Verbindungsöffnung mit geringerer Höhe an die erste Fluidkammer angeschlossen sein und an einem anderen Ende über eine Verbindungsöffnung mit größerer Höhe an die zweite Fluidkammer.

Dabei kann die Innenhöhe der ersten Fluidkammer der Höhe der die erste Fluidkammer mit dem Fluidkanal verbindenden Verbindungsöffnung entsprechen und die Innenhöhe der zweiten Fluidkammer der Höhe der die zweite Fluidkammer mit dem Fluidkanal verbindenden Verbindungsöffnung.

In weiterer besonders bevorzugter Ausgestaltung der Erfindung sind die erste und die zweite Fluidkammer jeweils nach oben hin durch eine bzw. ihre Deckenwandung geschlossen, wobei die Innenhöhe der ersten Fluidkammer kleiner ist als die Innenhöhe der zweiten Fluidkammer, insbesondere derart, dass die Innenhöhe der ersten Fluidkammer der Höhe der die erste Fluidkammer mit dem Fluidkanal verbindenden Verbindungsöffnung entspricht und die Innenhöhe der zweiten Fluidkammer der Höhe der die zweite Fluidkammer mit dem Fluidkanal verbindenden Verbindungsöffnung.

Was die Ausnehmung des Blasenfängers in der Deckenwandung des Fluidkanals betrifft, so kann vorzugsweise die Höhe der Ausnehmung am höchsten Punkt derselben in der Deckenwandung größer sein als die maximale Höhe der Innenseite der Deckenwandung entlang des Fluidkanals.

Alternativ oder zusätzlich kann die Höhe der Ausnehmung am höchsten Punkt derselben in der Deckenwandung größer sein als die Höhe der oben genannten Verbindungsöffnung mit größerer Höhe, die den Fluidkanal mit der zweiten Fluidkammer verbindet.

Weiter alternativ oder zusätzlich kann die Höhe der Ausnehmung am höchsten Punkt derselben größer sein als die Innenhöhe der zweiten Fluidkammer.

Vorzugsweise verfügt die Mikrotiterplatte, insbesondere jedes Messkammersystem, zusätzlich zu der ersten und der zweiten Fluidkammer noch über mindestens eine, mittels eines weiteren (separaten), insbesondere im Querschnitt allseitig geschlossenen Fluidkanals mit der zweiten Fluidkammer verbundene, nach oben hin offene Einlass(fluid-)kammer, über die Probefluid zuführbar ist.

Weiter vorzugsweise verfügt die Mikrotiterplatte, insbesondere jedes Messkammersystem, zusätzlich zu der ersten und der zweiten Fluidkammer noch über mindestens eine, durch einen weiteren (separaten), im Querschnitt allseitig geschlossen Fluidkanal mit der ersten Fluidkammer verbundene, nach oben hin offene Auslass(fluid-)kammer, über die aus dem Messkammersystem Probefluid entfernbar ist. Zudem kann durch diese beim Befüllen des Messkammersystems im Messkammersystem befindliche Luft entweichen.

Weiter vorzugsweise verfügt die Mikrotiterplatte, insbesondere jedes Messsystem, über mindestens eine dritte, insbesondere als Messkammer ausgebildete Fluidkammer, die nach oben hin durch eine Deckenwandung geschlossen ist, wobei die Innenhöhe der dritten Fluidkammer größer ist als die Innenhöhe der zweiten Fluidkammer und wobei die dritte Fluidkammer mit der zweiten Fluidkammer verbunden ist durch einen weiteren (separaten), im Querschnitt allseitig geschlossen, sich in mindestens einem Abschnitt, von der zweiten Fluidkammer zur dritten Fluidkammer nach oben hin aufweitenden Fluidkanal, vorzugsweise in einem Abschnitt, der sich über die gesamte Länge des Fluidkanals erstreckt.

Dabei kann sich die Breite des sich in dem mindestens einen Abschnitt aufweitenden weiteren Fluidkanals - in ähnlicher Weise wie bei dem die erste und die zweite Fluidkammer verbindenden Fluidkanal - in diesem Abschnitt von der zweiten zu der dritten Fluidkammer hin verengen.

Insofern bei dieser Ausführungsform eine Einlasskammer vorgesehen ist, wäre sie vorzugsweise mit der dritten Fluidkammer verbunden und nicht mit der zweiten Fluidkammer.

Was die Deckenwandungen der ersten und zweiten Fluidkammern und ggf. der dritten Fluidkammer betrifft, so können diese bevorzugt jeweils an die Umgebung der Mikrotiterplatte angrenzen, aus für Licht transparentem Material bestehen und jeweils die gleiche Dicke aufweisen.

Weiter können die Deckenwandungen der ersten, der zweiten und ggf. der dritten Fluidkammer bevorzugt eine jeweils zum Innenraum der jeweiligen Fluidkammer zeigende Innenseite und eine an die Außenumgebung der Mikrotiterplatte angrenzende, insbesondere parallel zur Innenseite verlaufende Außenseite aufweisen, wobei sich die jeweils gleiche Dicke der Deckenwandung auf den Abstand der Außenseite von der Innenseite bezieht bzw. diesem entspricht.

Zweckmäßigerweise verfügt die Mikrotiterplatte über eine (bei bestimmungsgemäßem Gebrauch der Mikrotiterplatte in einer horizontalen Ebene ausgerichtete) Basisplatte, auf der die erste, zweite und ggf. die dritte Fluidkammer, der/die die Fluidkammern verbindende(n) Fluidkanal/Fluidkanäle sowie ggf. die Einlass- und ggf. die Auslasskammer nebeneinander in einer gemeinsamen (horizontalen) Ebene angeordnet sind.

Die Basisplatte bildet dabei bevorzugt jeweils die jeweilige Bodenwandung der ersten, zweiten und ggf. dritten Fluidkammer, der/die die Fluidkammern verbindende(n) Fluidkanal/Fluidkanäle sowie ggf. der Einlass- und ggf. die Auslasskammer.

Die zum Innenraum der jeweiligen Fluidkammer zeigende Innenseite und/oder die an die Außenumgebung der Mikrotiterplatte angrenzende Außenseite der Deckenwandung der ersten, der zweiten und ggf. der dritten Fluidkammer kann dabei parallel zur Basisplatte der Mikrotiterplatte bzw. parallel zur an die Umgebung angrenzenden Außenseite der Basisplatte verlaufen.

Weitere Merkmale der vorliegenden Erfindung ergeben sich aus den beigefügten Patentansprüchen, der nachfolgenden Beschreibung bevorzugter Ausführungsbeispiele sowie aus den beigefügten Zeichnungen.

Darin zeigen:
- Fig. 1: eine Schrägansicht einer erfindungsgemäßen Mikrotiterplatte mit einer Vielzahl von rasterförmig angeordneten Messsystemen,
- Fig. 2: eine Draufsicht auf ein einzelnes Messsystem gemäß Fig. 1,

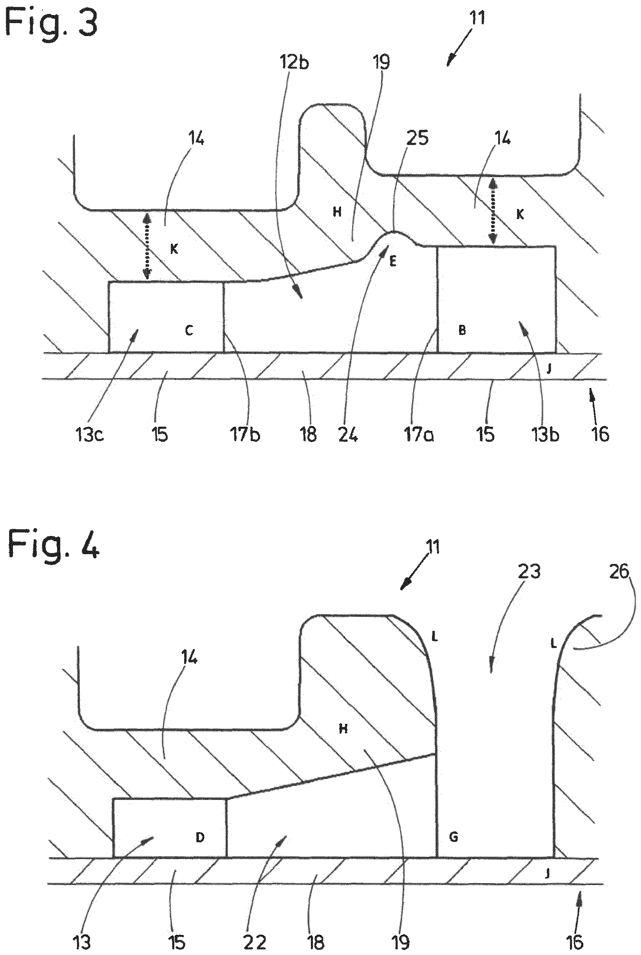

- Fig. 3: einen Querschnitt entlang der Schnittlinie B-B in Fig. 2,
- Fig. 4: einen Querschnitt entlang der Schnittlinie A-A in Fig. 2.

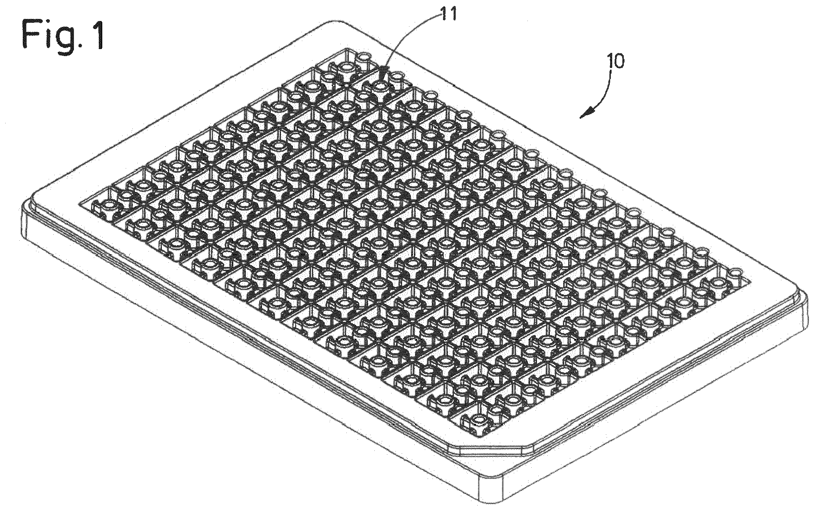

In Fig. 1 ist eine Mikrotiterplatte 10 gezeigt, die bevorzugt als Spritzgussteil aus Kunststoff gefertigt ist.

Die Mikrotiterplatte 10 verfügt über eine Vielzahl von Messsystemen 11. Die Messsysteme 11 sind rasterförmig über die Mikrotiterplatte 10 verteilt angeordnet. Wie im Stand der Technik bekannt, sind solche Mikrotiterplatten 10 in der Regel in ihren Abmaßen und ihrer Anzahl von Messsystemen 11 standardisiert, um eine einfache Einbindung derselben in bestehende automatisierte Messprozesse bzw. Messapparaturen zu ermöglichen.

Im vorliegenden Fall sind 8 x 12 Messsysteme 11 vorhanden. Es versteht sich aber, dass diverse andere rasterförmige Anordnungen, auch mit mehr oder weniger Messsystemen möglich sind.

Jedes der Messkammersysteme 11 verfügt über mehrere, vorliegend vier (es können aber auch mehr oder weniger sein) miteinander über (im Querschnitt zu allen Seiten geschlossene) Fluidkanäle 12a, 12b bzw. 12c verbundene, als Messkammern ausgebildete Fluidkammern 13a, 13b, 13c bzw. 13d.

Im vorliegenden Fall sind die Fluidkammern 13a-13d durch die Fluidkanäle 12a, 12b bzw. 12c nach Art einer "Reihenschaltung" in einer Reihe hintereinander bzw. aufeinanderfolgend angeordnet.

Entsprechend sind jeweils die in der Reihe erste Fluidkammer 13a nur mit der in der Reihe nachfolgenden Fluidkammer 13b und die in der Reihe letzte Fluidkammer 13d nur mit der in der Reihe vorhergehenden Fluidkammer 13c (über die Fluidkanäle 12a bzw. 12c) verbunden.

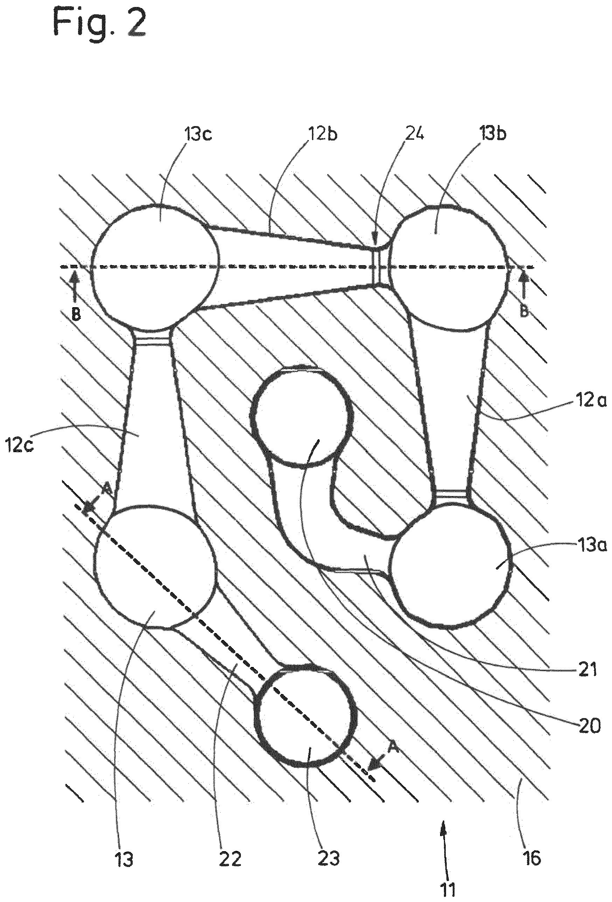

Die in der Reihe mittleren Fluidkammern 13b bzw. 13c sind über die Fluidkanäle 12a bzw. 12b bzw. 12c einerseits miteinander, andererseits mit der jeweils vorhergehenden Fluidkammer 13a bzw. der nachfolgenden Fluidkammer 13d verbunden, vgl. Fig. 2.

Sämtliche Fluidkammern 13a-13d sind jeweils nach oben und nach unten hin geschlossen, nämlich durch jeweils eine Deckenwandung 14 bzw. eine Bodenwandung 15.

Die Innenhöhen der Fluidkammern 13a-13d, nämlich vorliegend der Abstand der dem Innenraum der jeweiligen Fluidkammer 13a-13d zugewandten Innenseite der jeweiligen Deckenwandung 14 zu der dem Innenraum der jeweiligen Fluidkammer 13a-d zugewandten Innenseite der jeweiligen Bodenwandung 15, wird in Reihe der aufeinanderfolgenden Fluidkammern 13a-13d, beginnend mit der Fluidkammer 13a, über die Fluidkammer 13b, die Fluidkammer 13c, bis hin zu der Fluidkammer 13d jeweils kleiner.

Mithin gilt für jedes Paar 13a, 13b und 13b, 13c und 13c, 13d von miteinander über einen entsprechenden Fluidkanal 12a-12c verbundenen Fluidkammern 13a-13d, dass die Innenhöhe der jeweils in der Reihe vorhergehenden Fluidkammer 13a-13d größer ist als die Innenhöhe der jeweils in der Reihe nachfolgenden Fluidkammer 13a-13d.

Die Bodenwand 15 jeder Fluidkammer 13a-13d ist im vorliegenden Fall jeweils durch eine gemeinsame Basisplatte 16 bzw. eine entsprechende Wandung der Mikrotiterplatte 10 gebildet.

Die Deckenwandungen 14 der einzelnen Fluidkammern 13a-13d werden durch eine (andere) gemeinsame Wandung der Mikrotiterplatte 10 gebildet und sind entsprechend ineinander übergehend einstückig miteinander verbunden.

Für jedes Paar an Fluidkammern 13a, 13b; 13b, 13c; 13c, 13d gilt des Weiteren, dass der das jeweilige Paar jeweils verbindende Fluidkanal 12a, 12b bzw. 12c an einem Ende über eine Verbindungsöffnung 17a mit größerer Höhe an die in der Reihe vorhergehende Fluidkammer 13a-13d angeschlossen ist und an seinem anderen Ende über eine Verbindungsöffnung 17b mit kleinerer Höhe an die jeweils in der Reihe nachfolgende Fluidkammer 13a-13d.

Dabei entspricht die Innenhöhe der jeweils vorhergehenden Fluidkammer 13a-13d mit größerer Höhe der Höhe der entsprechenden Verbindungsöffnung 17a und die Innenhöhe der in der Reihe nachfolgenden Fluidkammer 13a-13d der Höhe der entsprechenden Verbindungsöffnung 17b.

Die (im Querschnitt allseitig geschlossenen) Verbindungskanäle 12a, 12b, 12c sind jeweils nach unten hin durch Bodenwandungen 18 geschlossen und nach oben hin durch Deckenwandungen 19. Die Bodenwandungen 18 werden dabei ebenfalls wie die Bodenwandungen 15 der Fluidkammern 13a-13d durch die Basisplatte 16 gebildet. Die Deckenwandungen 19 der Fluidkanäle 12a, 12b, 12c schließen einstückig an die Deckenwandungen 14 der Fluidkammern 13a-13d an.

Die Deckenwandungen 19 der Fluidkanäle 12a, 12b, 12c verlaufen geneigt zur Horizontalen. Für jedes Paar von in der Reihe aufeinanderfolgenden Fluidkammern 13a, 13b; 13b, 13c sowie 13c, 13d gilt dabei, dass die Innenhöhe des jeweiligen Fluidkanals 12a, 12b, 12c, also der Abstand der jeweiligen Innenseite der Deckenwandung 19 zu der jeweiligen Bodenwandung 18, in dem Bereich, in dem der jeweilige Fluidkanal 12a, 12b, 12c an die Verbindungsöffnung 17a anschließt, größer ist als an dem anderen Ende des Fluidkanals 12a, 12b, 12c, an dem der Fluidkanal 12a, 12b, 12c, an die Verbindungsöffnung 17b anschließt.

Zwischen den beiden Verbindungsöffnungen 17a, 17b verläuft die Innenseite der Deckenwandung 19 entlang des jeweiligen Fluidkanals 12a-12c mindestens abschnittsweise schräg nach unten geneigt, sodass sich der entsprechende Fluidkanal 12a-12c in dieser Richtung verengt bzw. in entgegengesetzter Richtung aufweitet.

Vorliegend weitet sich der jeweilige Fluidkanal 12a-12c (in entgegengesetzter Richtung) mit Ausnahme eines Bereichs, in dem ein später noch näher beschriebener Blasenfänger angeordnet ist, im Wesentlichen über die gesamte jeweilige Länge desselben auf, und zwar zudem stetig und konstant ansteigend.

Es liegt ausdrücklich im Rahmen der Erfindung, dass sich der jeweilige Fluidkanal 12a-12c nur in einem jeweiligen Teilabschnitt des jeweiligen Fluidkanals 12a-12c aufweitet (also nicht entlang der gesamten Länge des Fluidkanals 12a-12c) oder in mehreren (kürzeren) Teilabschnitten. Dabei muss sich der jeweilige Fluidkanal 12a-12c nicht mit konstanter Steigung aufweiten, sondern es sind variierende bzw. unkonstante Aufweitungsanstiege denkbar. Zudem kann es auch zu Unstetigkeiten in der Aufweitung kommen.

Jedes Messkammersystem 11 verfügt im Übrigen über eine Einlasskammer 20, die über einen Fluidkanal 21 mit der Fluidkammer 13a mit größter Innenhöhe verbunden ist.

Weiter verfügt jedes Messkammersystem 11 über eine mit dem in der Reihe der Fluidkammern 13a-13d letzten Fluidkammer 13d niedrigster Innenhöhe über einen Fluidkanal 22 verbundene Auslasskammer 23.

Jedes Messkammersystem 11 kann über die Einlasskammer 20 mit Probeflüssigkeit befüllt werden, die dann über den Fluidkanal 21 in die Fluidkammer 13a fließt und über die weiteren Kanäle 12a, 12b, 12c in die in der Reihe nachfolgenden Fluidkammern 13b, 13c bzw. 13d sowie schließlich über den Fluidkanal 22 in die Auslasskammer 23.

Bei entsprechender Befüllung werden die einzelnen Fluidkammern 13a-13d vollständig befüllt, d.h. bis die Höhe des Fluidspiegels der Innenhöhe derselben entspricht.

Aufgrund der unterschiedlichen Innenhöhen der verschiedenen Fluidkammern 13a-13d stellen sich für Lichtstrahlen, die im Rahmen photometrischer Messungen von oben durch die transparenten Deckenwandungen 14 senkrecht in die Fluidkammern 13a-13d gestrahlt werden, unterschiedliche optische Pfadlängen in der jeweiligen Probeflüssigkeit der jeweiligen Fluidkammer 13a-13d ein.

Unter Zuhilfenahme des Lambert-Beerschen-Gesetzes kann dann durch Analyse der aufgrund der unterschiedlichen Pfadlängen unterschiedlichen Absorptionswerte der Probeflüssigkeit auf die Konzentration der in der Probe enthaltenen Molekülkonzentration rückgeschlossen werden.

Insbesondere bei der Befüllung der Messkammersysteme 11 können sich turbulente Strömungen einstellen, die es befördern, dass aus der jeweiligen Probenflüssigkeit Luftblasen entweichen, die wiederum insbesondere optische bzw. photometrische Messungen stören können.

Die Erfindung sieht zum einen vor, solche Strömungen zu minimieren. Zu diesem Zweck sind die Fluidkanäle 12a, 12b, 12c jeweils in ihrer Breite von der in der Reihe der Fluidkammern 13a-13d vorhergehenden Fluidkammer 13a-13d mit größerer Innenhöhe zur nachfolgenden Fluidkammer 13a-13d aufweitend ausgebildet bzw. in der umgekehrten Richtung verengend, vgl. die Draufsicht in Fig. 2. Hierdurch werden Druckunterschiede in dem Messkammersystem 11 verringert.

Gemäß einer weiteren Besonderheit ist vorgesehen, Luftblasen, so sie denn entstehen und sich in dem jeweiligen Fluidkanal 12a-12c befinden sollten, einzufangen. Zu diesem Zweck sind in den Fluidkanälen 12a-12c jeweils Blasenfänger positioniert. In dem vorliegenden Ausführungsbeispiel sind dies in der jeweiligen Deckenwandung 19 angeordnete Ausnehmungen 25, die nach unten zum Innenraum des jeweiligen Fluidkanals 12a-12c zeigen.

Im vorliegenden Ausführungsbeispiel erstrecken sich diese Ausnehmungen 25 über die gesamte Breite der jeweiligen Deckenwandung 19, vgl. Fig. 2.

Zudem ist die Ausnehmung 25 vorliegend jeweils so angeordnet, dass deren höchster Punkt in der Deckenwandung 19 größer ist als die maximale Innenhöhe des jeweiligen Fluidkanals 12a-12c entlang des Fluidkanals 12a-12c.

Zudem ist die Höhe der Ausnehmung 25 am höchsten Punkt im vorliegenden Fall jeweils größer als die Höhe der Verbindungsöffnung 17a, die an die jeweilige Fluidkammer größerer Innenhöhe der Fluidkammer 13a-13d des jeweiligen Paares von Fluidkammern 13a,13b; 13b, 13c; 13c, 13d anschließt, zwischen denen sich der jeweilige Fluidkanal 12a-12c erstreckt.

Schließlich ist die Höhe dieser Ausnehmung 25 am höchsten Punkt auch größer als die Innenhöhe der jeweils anderen Fluidkammer 13a-13d mit kleinerer Innenhöhe des jeweiligen Paares von Fluidkammern 13a, 13b; 13b, 13c; 13c, 13d.

Insofern beispielsweise beim oder nach dem Befüllen des Messkammersystems 11 mit der Probenflüssigkeit aus der Fluidkammer 13a-13d mit geringerer Innenhöhe austretende Luftblasen in den Fluidkanal 12a-12c wandern und dann aufgrund der schrägverlaufenden Innenseite der Deckenwandung 19 des jeweiligen Fluidkanals 12a-12c an dieser Innenseite zu der anderen Fluidkammer 13a-13d mit größerer Innenhöhe des jeweiligen Paares von Fluidkammern 13a, 13b; 13b, 13c; 13c, 13d hin wandern, werden sie auf ihrem Weg entlang der Innenseite der Deckenwandung 19 in der Ausnehmung 25 des Blasenfängers 24 gefangen. Entsprechend können sie dann nicht in die jeweilige Fluidkammer 13a-13d mit größerer Innenhöhe eindringen und dort Messergebnisse verfälschen.

Alternativ zu solchen Ausnehmungen 25 in der Deckenwandung 19 können beispielsweise auch nach unten gerichtete Stege vorgesehen sein, die an der Deckenwandung 19 (insbesondere deren Innenseite) angebracht, insbesondere an diese einstückig angeformt sind, und die in ähnlicher Weise Luftblasen in ihrem weiteren Weg stoppen können.

Eine weitere Besonderheit der Erfindung ist, dass die (mit ihrer Außenseite an die Umgebung angrenzenden) Deckenwandungen 14 der jeweiligen Fluidkammern 13a-13d jeweils die gleiche Dicke aufweisen, um die optischen Pfadlängen durch diese Deckenwandungen 14 hindurch, d.h. innerhalb der jeweiligen Deckenwandung 14, für eingestrahltes Detektionslicht identisch auszubilden. Hierdurch kann gegebenenfalls auf Kalibrierungsmessungen verzichtet werden.

Eine weitere Besonderheit besteht schließlich noch in der Ausbildung der Einlass- und Auslasskammern 20 bzw. 23.

Sowohl die nach oben offene Einlasskammer 20 als auch die nach oben offene Auslasskammer 23 sind jeweils so ausgebildet, dass sich deren seitliche Wandungen 26 bzw. deren von den seitlichen Wandungen 26 eingeschlossener Innenraum nach oben hin, nämlich senkrecht zur Bodenplatte 16, etwas aufweitet. So können verschiedene Spitzen und Kanülen unterschiedlichster Durchmesser auf die Einlass- bzw. die Auslasskammer 20 bzw. 23 aufgesetzt werden, sodass ein einfaches Befüllen und Entleeren des Systems möglich ist.

Indem die Einlass- und die Auslasskammer 20 bzw. 23 im vorliegenden Fall darüber hinaus identisch ausgebildet sind, könnte theoretisch das jeweilige Messsystem 11 auch umgekehrt als vorgesehen befüllt werden. Nämlich indem anstelle der Einlasskammer 20 die jeweilige Auslasskammer 23 mit der Probeflüssigkeit befüllt wird und später die jeweilige Einlasskammer 20 zum Entleeren des Messkammersystems 11 verwendet wird.

### Bezugszeichenliste:

- 10: Mikrotiterplatte
- 11: Messsystem
- 12a: Fluidkanal
- 12b: Fluidkanal
- 12c: Fluidkanal
- 13a: Fluidkammer
- 13b: Fluidkammer
- 13c: Fluidkammer
- 13d: Fluidkammer
- 14: Deckenwandung
- 15: Bodenwandung
- 16: Basisplatte
- 17a: Verbindungsöffnung
- 17b: Verbindungsöffnung
- 18: Bodenwandung
- 19: Deckenwandung
- 20: Einlasskammer
- 21: Fluidkanal
- 22: Fluidkanal
- 23: Auslasskammer
- 24: Blasenfänger
- 25: Ausnehmung
- 26: seitliche Wandung

## Patentansprüche

1. Mikrotiterplatte, bevorzugt als Spritzgussteil aus Kunststoff, mit mindestens einer ersten und einer zweiten, insbesondere als Messkammer ausgebildeten Fluidkammer (13a-d), die durch einen im Querschnitt zu allen Seiten bzw. ringsherum geschlossenen Fluidkanal (12a-c) miteinander verbunden sind, **dadurch gekennzeichnet, dass** dem Fluidkanal (12a-c) ein Blasenfänger (24) zugeordnet ist, mit dem Luft- oder Gasblasen, die sich entlang einer den Fluidkanal (12a-c) nach oben hin schließenden Deckenwandung des Fluidkanals insbesondere von der ersten zur zweiten Fluidkammer bewegen, in ihrer Bewegung gestoppt werden können.

2. Mikrotiterplatte, bevorzugt als Spritzgussteil aus Kunststoff, insbesondere gemäß Anspruch 1, mit mehreren rasterförmig über die Mikrotiterplatte verteilt angeordneten Messkammersystemen (11), wobei jedes Messkammersystem (11) mindestens eine erste und eine zweite, insbesondere als Messkammer ausgebildete Fluidkammer (13a-d) aufweist, die über einen im Querschnitt ringsherum geschlossenen, sich von der ersten Fluidkammer (13a-d) zur zweiten Fluidkammer (13a-d) in mindestens einem Abschnitt desselben nach oben hin aufweitenden Fluidkanal (12a-c) miteinander verbunden sind, vorzugsweise in einem Abschnitt, der sich über die gesamte Länge des Fluidkanals erstreckt, wobei die erste und die zweite Fluidkammer (13a-d) jeweils nach oben hin durch eine Deckenwandung geschlossen sind, und wobei die Innenhöhe der ersten Fluidkammer (13a-d) kleiner ist als die Innenhöhe der zweiten Fluidkammer (13a-d), **dadurch gekennzeichnet, dass** sich die Breite des Fluidkanals (12a-c) in dem mindestens einen Abschnitt von der ersten zu der zweiten Fluidkammer (13a-d) hin verengt.

3. Mikrotiterplatte gemäß Anspruch 1 oder einem oder mehreren weiteren der vorhergehenden Ansprüche, **dadurch gekennzeichnet, dass** der Blasenfänger (24) eine zum Fluidkanalinnenraum hin offene Ausnehmung (25) in der Deckenwandung des Fluidkanals (12a-c) umfasst, in die eine Luft- oder Gasblase eindringen kann, insbesondere eine solche Ausnehmung (25), die sich in dem Bereich der Deckenwandung, in dem sie angeordnet ist, im Querschnitt über die gesamte Breite der Deckenwandung erstreckt.

4. Mikrotiterplatte gemäß Anspruch 1 oder einem oder mehreren weiteren der vorhergehenden Ansprüche, **dadurch gekennzeichnet, dass** der Blasenfänger (24) einen mit der Deckenwandung des Fluidkanals (12a-c) verbundenen, nach unten gerichteten, insbesondere an die Deckenwandung angeformten Vorsprung oder Steg umfasst.

5. Mikrotiterplatte gemäß Anspruch 1 oder einem oder mehreren weiteren der vorhergehenden Ansprüche, **dadurch gekennzeichnet, dass** der Steg eine im oberen Bereich des Kanals angeordnete Teilquerschnittsfläche der gesamten Fluidkanalquerschnittsfläche überdeckt, insbesondere zu der Deckenwandung des Fluidkanals (12a-c) hin und zu seitlichen Wandungen des Fluidkanals (12a-c) hin dichtend, sodass sich seitlich und oberhalb des Steges keine Luft- oder Gasblasen an diesem vorbeibewegen können.

6. Mikrotiterplatte gemäß einem oder mehreren der vorhergehenden Ansprüche, **dadurch gekennzeichnet, dass** sich der Fluidkanal (12a-c) von der ersten zur zweiten Fluidkammer (13a-d) mindestens in einem Abschnitt desselben nach oben hin aufweitet, vorzugsweise in einem Abschnitt, der sich über die gesamte Länge des Fluidkanals erstreckt, sodass die Innenseite der Deckenwandung desselben in diesem Abschnitt zur Horizontalen geneigt verläuft.

7. Mikrotiterplatte gemäß einem oder mehreren der vorhergehenden Ansprüche, **dadurch gekennzeichnet, dass** der Fluidkanal (12a-c) an einem Ende über eine Verbindungsöffnung mit geringerer Höhe an die erste Fluidkammer (13a-d) angeschlossen ist und an einem anderen Ende über eine Verbindungsöffnung mit größerer Höhe an die zweite Fluidkammer (13a-d), insbesondere derart, dass die Innenhöhe der ersten Fluidkammer (13a-d) der Höhe der die erste Fluidkammer (13a-d) mit dem Fluidkanal (12a-c) verbindenden Verbindungsöffnung entspricht und die Innenhöhe der zweiten Fluidkammer (13a-d) der Höhe der die zweite Fluidkammer (13a-d) mit dem Fluidkanal (12a-c) verbindenden Verbindungsöffnung.

8. Mikrotiterplatte gemäß Anspruch 7, **dadurch gekennzeichnet, dass** die erste und die zweite Fluidkammer (13a-d) jeweils nach oben hin durch eine Deckenwandung geschlossen sind, wobei die Innenhöhe der ersten Fluidkammer (13a-d) kleiner ist als die Innenhöhe der zweiten Fluidkammer (13a-d), insbesondere derart, dass die Innenhöhe der ersten Fluidkammer (13a-d) der Höhe der die erste Fluidkammer (13a-d) mit dem Fluidkanal (12a-c) verbindenden Verbindungsöffnung entspricht und die Innenhöhe der zweiten Fluidkammer (13a-d) der Höhe der die zweite Fluidkammer (13a-d) mit dem Fluidkanal (12a-c) verbindenden Verbindungsöffnung.

9. Mikrotiterplatte gemäß einem oder mehreren der vorhergehenden Ansprüche, **dadurch gekennzeichnet, dass** die Höhe der Ausnehmung (25) des Blasenfängers (24) am höchsten Punkt derselben in der Deckenwandung größer ist als die maximale Höhe der Innenseite der Deckenwandung entlang des Fluidkanals (12a-c), und/oder dass die Höhe der Ausnehmung (25) am höchsten Punkt derselben in der Deckenwandung größer ist als die Höhe der Verbindungsöffnung mit größerer Höhe, die den Fluidkanal (12a-c) mit der zweiten Fluidkammer (13a-d) verbindet, und/oder dass die Höhe der Ausnehmung (25) am höchsten Punkt derselben größer ist als die Höhe der zweiten Fluidkammer (13a-d).

10. Mikrotiterplatte gemäß einem oder mehreren der vorhergehenden Ansprüche, **dadurch gekennzeichnet, dass** die Mikrotiterplatte, insbesondere jedes Messsystem (11), zusätzlich zu der ersten und der zweiten Fluidkammer (13a-d) noch über mindestens eine, mittels eines weiteren (separaten), insbesondere im Querschnitt allseitig geschlossenen Fluidkanals (12a-c) mit dem Messsystem (11), insbesondere mit der Fluidkammer (13a-d) mit größter Innenhöhe verbundene, nach oben hin offene Einlasskammer verfügt, über die Probefluid zuführbar ist.

11. Mikrotiterplatte gemäß einem oder mehreren der vorhergehenden Ansprüche, **dadurch gekennzeichnet, dass** die Mikrotiterplatte, insbesondere jedes Messsystem (11), zusätzlich zu der ersten und der zweiten Fluidkammer (13a-d) noch über mindestens eine, durch einen weiteren (separaten), im Querschnitt allseitig geschlossenen Fluidkanal (12a-c) mit dem Messsystem (11), insbesondere der ersten Fluidkammer (13a-d) mit kleinster Innenhöhe verbundene, nach oben hin offene Auslasskammer verfügt, über die aus dem Messsystem (11) Probefluid entfernbar ist.

12. Mikrotiterplatte gemäß einem oder mehreren der vorhergehenden Ansprüche, **dadurch gekennzeichnet, dass** die Mikrotiterplatte, insbesondere jedes Messsystem (11), mindestens eine dritte, insbesondere als Messkammer ausgebildete Fluidkammer (13a-d) aufweist, die nach oben hin durch eine Deckenwandung geschlossen ist, wobei die Innenhöhe der dritten Fluidkammer (13a-d) größer ist als die Innenhöhe der zweiten Fluidkammer (13a-d) wobei die dritte Fluidkammer (13a-d) mit der zweiten Fluidkammer (13a-d) verbunden ist durch einen weiteren (separaten), im Querschnitt allseitig geschlossenen, sich in mindestens einem Abschnitt desselben von der zweiten Fluidkammer (13a-d) zur dritten Fluidkammer (13a-d) nach oben hin aufweitenden Fluidkanal (12a-c), vorzugsweise in einem Abschnitt, der sich über die gesamte Länge des Fluidkanals erstreckt, insbesondere durch einen solchen weiteren Fluidkanal (12a-c), dessen Breite sich in dem Abschnitt, in dem er sich von der zweiten Fluidkammer (13a-d) zur dritten Fluidkammer (13a-d) nach oben hin aufweitet, von der zweiten zu der dritten Fluidkammer hin verengt.

13. Mikrotiterplatte gemäß einem oder mehreren der vorhergehenden Ansprüche, **dadurch gekennzeichnet, dass** die Deckenwandungen der ersten und zweiten Fluidkammern (13a-d) und ggf. der dritten Fluidkammer (13a-d) jeweils an die Umgebung der Mikrotiterplatte angrenzen, aus für Licht transparentem Material bestehen und jeweils die gleiche Dicke aufweisen.

14. Mikrotiterplatte gemäß Anspruch 13, **dadurch gekennzeichnet, dass** die Deckenwandungen der ersten, der zweiten und ggf. der dritten Fluidkammer (13a-d) eine jeweils zum Innenraum der jeweiligen Fluidkammer (13a-d) zeigende Innenseite und eine an die Außenumgebung der Mikrotiterplatte angrenzende, insbesondere parallel zur Innenseite verlaufende Außenseite aufweist, wobei sich die jeweils gleiche Dicke der Deckenwandung auf den Abstand der Außenseite von der Innenseite bezieht bzw. diesem entspricht.

15. Mikrotiterplatte gemäß einem oder mehreren der vorhergehenden Ansprüche, **dadurch gekennzeichnet, dass** die Mikrotiterplatte eine (bei bestimmungsgemäßem Gebrauch der Mikrotiterplatte in einer horizontalen Ebene ausgerichtete) Basisplatte aufweist, auf der die erste, zweite und ggf. die dritte Fluidkammer (13a-d), der/die die Fluidkammern (13a-d) verbindende(n) Fluidkanal/Fluidkanäle (12a-c) sowie ggf. die Einlass- und ggf. die Auslasskammer nebeneinander in einer gemeinsamen (horizontalen) Ebene angeordnet sind, insbesondere eine solche Basisplatte, die jeweils die jeweilige Bodenwandung der ersten, zweiten und ggf. dritten Fluidkammer (13a-d), der/die die Fluidkammern verbindende(n) Fluidkanal/Fluidkanäle (12a-c) sowie ggf. der Einlass- und ggf. die Auslasskammer bildet.

16. Mikrotiterplatte gemäß Anspruch 15, **dadurch gekennzeichnet, dass** die zum Innenraum der jeweiligen Fluidkammer zeigende Innenseite und/oder die an die Außenumgebung der Mikrotiterplatte angrenzende Außenseite der Deckenwandung der ersten, der zweiten und ggf. der dritten Fluidkammer (13a-d) parallel zur Basisplatte der Mikrotiterplatte bzw. parallel zur an die Umgebung angrenzenden Außenseite der Basisplatte verläuft.
